# EUROPÄISCHE PATENTSCHRIFT

(11) **EP 2 825 736 B1**
(45) Veröffentlichungstag und Bekanntmachung des Hinweises auf die Patenterteilung: **24.08.2016**
(21) Anmeldenummer: 13717244.1
(22) Anmeldetag: 11.04.2013
(51) Int. Cl.: F01K 13/02, F22B 1/00

(54) **VERFAHREN UND VORRICHTUNG ZUM BETRIEB EINES SOLARTHERMISCHEN KRAFTWERKS**
METHOD AND APPARATUS FOR OPERATING A SOLAR THERMAL POWER PLANT
PROCÉDÉ ET DISPOSITIF POUR FAIRE FONCTIONNER UNE CENTRALE HÉLIOTHERMIQUE

(30) Priorität: 19.04.2012 DE 102012206466
(43) Veröffentlichungstag der Anmeldung: 21.01.2015
(73) Patentinhaber: Siemens Aktiengesellschaft, 80333 München (DE)
(72) Erfinder: BRÜCKNER, Jan, 91080 Uttenreuth (DE); THOMAS, Frank, 91056 Erlangen (DE)
(86) Internationale Anmeldenummer: PCT/EP2013/057541
(87) Internationale Veröffentlichungsnummer: WO 2013/156375

(56) Entgegenhaltungen:
- EP-A1- 2 187 051
- WO-A2-2011/104328
- DE-A1-102010 027 226
- DE-A1-102010 040 623

## Beschreibung

Die Erfindung betrifft ein Verfahren gemäß Anspruch 1, sowie eine entsprechende Vorrichtung gemäß Anspruch 7.

Solarthermische Kraftwerke stellen heute eine Alternative zur herkömmlichen Stromerzeugung dar. Ein bereits bekanntes Kraftwerkskonzept in diesem Bereich ist das sogenannte Parabolrinnenkraftwerk. In diesem Kraftwerkstyp wird als Wärmeträgermedium üblicherweise Thermoöl verwendet, welches die Parabolrinnen durchströmt und damit die über die Sonne eingebrachte Wärme aufnimmt. Die so vom Wärmeträgermedium aufgenommene Wärme wird anschließend in einem Dampferzeuger genutzt, um Dampf zu erzeugen. Dabei werden im Dampferzeuger die mit Wasserdampf gefüllten Dampferzeugerrohre von dem Wärmeträgermedium so umströmt, dass es seine Wärme an die kälteren Dampferzeugerrohre abgibt. Der so in den Rohren erzeugte Dampf treibt dann eine konventionelle Dampfturbine an.

Zur Erzielung eines möglichst hohen Anlagenwirkungsgrades ist üblicherweise eine Zwischenüberhitzung des Dampfes vorzusehen. Das heißt, der abgekühlte Abdampf einer HD-Turbinenstufe wird einem weiteren auch vom Wärmeträgermedium beheizten Wärmeübertrager zugeführt und abermals auf ein höheres Temperaturniveau gebracht. Im Gegensatz zum eingangs beschriebenen Dampferzeuger werden in diesem Zwischenüberhitzer die mit Wärmeträgermedium durchströmten Zwischenüberhitzerrohre nun vom Dampf so umströmt, dass sich dieser an den stark erhitzten, das Wärmeträgermedium führenden Rohren entsprechend aufheizt. Aufgrund der verhältnismäßig großen Volumenströme des Zwischenüberhitzerdampfes halten sich mit einem derartigen Zwischenüberhitzerdesign dabei die dampfseitigen Druckverluste in akzeptablen Grenzen.

Für den vom Dampferzeuger physisch getrennten Zwischenüberhitzer kann dabei die zugeführte Menge an Wärmeträgermedium als freier Parameter angesehen werden. Das bedeutet, dem Zwischenüberhitzer muss nur gerade soviel Wärmeträgermedium zugeführt werden, dass bei einem vorgegebenen von der HD-Turbine kommenden Dampfmassenstrom die gewünschte Endtemperatur des Zwischenüberhitzerdampfes erreicht wird. Diese Endtemperatur kann somit als Regelgröße für die zuzuführende Menge an Wärmeträgermedium dienen.

Das Dokument DE 10 2010 040 623 A1 offenbart ein bekanntes Verfahren zur Regelung einer Zwischenüberhitzung eines Abhitzedampferzeugers.

Aufgabe der Erfindung ist es, ein entsprechend zuverlässiges Verfahren und eine Vorrichtung für die Regelung der dem Zwischenüberhitzer zuzuführenden Menge an Wärmeträgermedium bereit zu stellen.

Diese Aufgabe wird mit dem Verfahren mit den Merkmalen des Anspruchs 1, sowie der entsprechenden Vorrichtung mit den Merkmalen des Anspruchs 7 gelöst. Vorteilhafte Ausbildungen sind den Unteransprüchen 2 bis 6 sowie 8 bis 13 zu entnehmen.

Die Erfindung bedient sich dabei einer am Anlagenzustand ausgerichteten und prädiktiv ermittelten Menge an Wärmeträgermedium. Konkret bedeutet dies, dass zu jedem beliebigen Zeitpunkt der zum Erreichen der Endtemperatur des Zwischenüberhitzerdampfes erforderliche Massenstrom des Wärmeträgermediums auf Basis anlagenspezifischer Parameter in einer Art prädiktiven Vorausschau ermittelt wird.

Als wesentliche Kenngröße dient hier der zur Erreichung der Endtemperatur des Zwischenüberhitzerdampfes erforderliche Wärmestrom, der im Zwischenüberhitzer über entsprechend angeordnete Rohre von dem Wärmeträgermedium, wie zum Beispiel Thermoöl, an den Dampf zu übertragen ist. Zur Ermittlung dieses Wärmestroms werden dazu dampfseitig die Temperatur und der Druck am Eintritt des Zwischenüberhitzers gemessen und in eine zugehörige Ist-Eintrittsenthalpie umgerechnet. Austrittsseitig wird bei gemessenem Dampfdruck und einem einzustellenden gewünschten Temperatursollwert ebenfalls eine zugehörige Soll-Austrittsenthalpie bestimmt. Wird die Ist-Eintritts- von der Soll-Austrittsenthalpie subtrahiert und die Differenz anschließend vorzugsweise mit dem gemessenen Dampfmassenstrom multipliziert, was aber auch eine sonstige den Dampfmassenstrom charakterisierende Kenngröße sein kann, ist der zur Aufheizung des Dampfes erforderliche Wärmestrom bekannt. Werden nun ebenfalls die Ein- und Austrittstemperaturen sowie deren zugehörige Drücke des Wärmeträgermediums gemessen und bei bekannten Stoffwerten des Wärmeträgermediums in zugehörige Enthalpien umgerechnet, so kann auch hier eine Enthalpiedifferenz des Wärmeträgermediums zwischen Ein- und Austritt bestimmt werden. Wird der dampfseitig errechnete Wärmebedarf durch diese wärmeträgerseitige Enthalpiedifferenz dividiert, ist für den stationären Anlagenzustand zu jedem beliebigen Zeitpunkt der erforderliche Massenstrom des Wärmeträgermediums bekannt.

Vorzugsweise kann durch den Einsatz des erfindungsgemäßen Verfahrens bzw. der erfindungsgemäßen Vorrichtung auch während stark instationärer Anlagenzustände des Parabolrinnenkraftwerks die Endtemperatur des Zwischenüberhitzers möglichst schwankungsarm geregelt werden. Da anlagenspezifische Parameter wie z.B. Messgrößen als auch zusätzlich konstruktive Merkmale des Zwischenüberhitzerdesigns im Konzept adäquat berücksichtigt werden, kann der wärmeträgermediumsseitige Massenstrombedarf für jeden beliebigen Anlagenzustand zu jeder Zeit vorausberechnet werden. Im Vergleich zu einer reinen Regelung der Dampfendtemperatur, die nur bei Änderungen dieser Dampftemperatur reagieren kann, wird mit der vorliegenden Erfindung bereits zu Beginn einer extern aufgeprägten Störung (wie z.B. eine Änderung des Dampfmassenstroms) diese zeitnah erfasst und korrigiert. Das erfindungsgemäße Verfahren bzw. die erfindungsgemäße Vorrichtung reagieren so bereits vorausschauend auf eine zu erwartende Änderung der Austrittstemperatur des Zwischenüberhitzers, und wirken somit einer solchen Änderung schon im Vorfeld entgegen.

Bevorzugt sind das erfindungsgemäße Verfahren und die erfindungsgemäße Vorrichtung integriert in ein solarthermisches Parabolrinnenkraftwerk mit einem Zwischenüberhitzer, um so auch für stark instationäre Betriebszustände, wie sie in solarbeheizten Kraftwerken vermehrt auftreten (z.B. durch Wolkendurchzug), möglichst konstante Dampftemperaturen am Ausgang des Zwischenüberhitzers sicherzustellen. Neben einer somit sicheren und stabilen Fahrweise bei sich ändernden Wetterbedingungen kann durch ein materialschonendes Konzept die Verfügbarkeit der gesamten Kraftwerksanlage verbessert werden. Vorzugsweise kommt die Erfindung dabei in solarthermischen Karftwerken zum Einsatz bei denen als Wärmeträgermedium Thermoöl zur Anwendung kommt. Das erfindungsgemäße Konzept ist prinzipiell aber auch bei Anlagen mit anderen Wärmeträgermedien anwendbar, vorausgesetzt die Anlage verfügt über einen eigenen, nicht in den Dampferzeuger integrierten Zwischenüberhitzer als weiteren Wärmeübertrager. Darüber hinaus eignet sich das erfindungsgemäße Konzept auch ohne nennenswerte Änderungen für die Verwendung in Kombination mit anderen Komponenten wie beispielsweise Endeinspritzkühler oder vergleichbaren Maßnahmen zur Stabilisierung des Speisewassermassenstroms im Dampferzeuger eines solarthermischen Parabolrinnenkraftwerks.

Die Erfindung soll nun anhand der nachfolgenden Figuren beispielhaft erläutert werden. Es zeigen:
- FIG 1: schematisch ein erfindungsgemäßes Regelkonzept,
- FIG 2: schematisch ein erweitertes Regelkonzept.

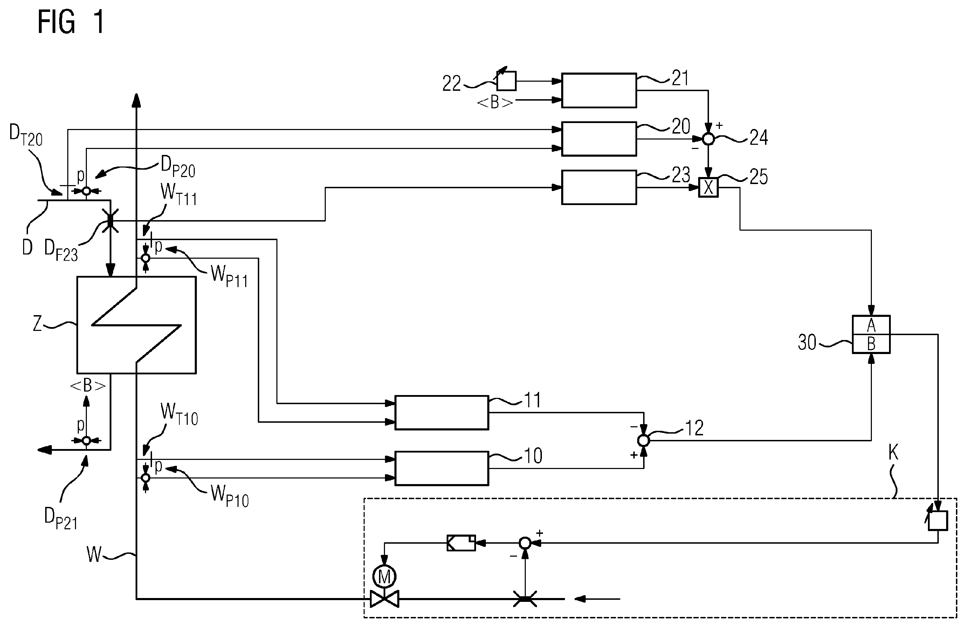

FIG 1 zeigt schematisch ein mögliches Regelkonzept für den stationären Betrieb eines solarthermischen Parabolrinnenkraftwerks. Dargestellt ist hier der Zwischenüberhitzer Z, eine Regeleinrichtung K zum Einstellen und Korrigieren des Massenstroms des Wärmeträgermediums W, sowie eine entsprechende Massenstromsollwertführungs-einrichtung zum Ansteuern und damit Führen der Regeleinrichtung K in Abhängkeit von einer ermittelten Enthalpiedifferenz des Wärmeträgermediums W zwischen dessen Ein-und Austritt in und aus dem Zwischenüberhitzer Z und einer ermittelten Enthalpiedifferenz des Dampfes D zwischen dessen Aus- und Eintritt aus und in den Zwischenüberhitzer Z.

Der Zwischenüberhitzer Z ist dabei dampfseitig mit entsprechenden Leitungen zum Führen des Dampfes D, sowie wärmeträgermediumseitig mit entsprechenden Rohren zum Führen des Wärmeträgermediums W verbunden. Die Regeleinrichtung K zum Einstellen des Massenstroms des Wärmeträgermediums W umfasst dabei einen Stellmotor, ein vom Stellmotor angesteuertes Drosselventil, sowie eine vor dem Drosselventil angeordnete Messeinrichtung zum Ermitteln des jeweils aktuellen Massenstroms des Wärmeträgermediums W. Zusammen mit einem entsprechend ausgebildeten Regelelement bilden die Messeinrichtung, der Stellmotor und das Drosselventil einen Regelkreis zum Nachführen des aktuell eingestellten Massenstroms des Wärmeträgermediums W entsprechend einem vorgegebenen Massenstromsollwert.

Geführt wird die Regeleinrichtung K dabei von einer Massenstromsollwertführungseinrichtung, die den gewünschten Massenstromsollwert vorgibt. Die Massenstromsollwertführungseinrichtung ist dazu erfindungsgemäß so ausgebildet, dass im Betrieb eines solarthermischen Kraftwerks bei dem im Zwischenüberhitzer Z im Wasser-Dampf-Kreislauf Dampf D von einem solarthermisch aufgeheizten Wärmeträgermedium W auf einen einstellbaren Solltemperaturwert am Austritt erhitzt wird, zum Erhitzen des Dampfes D auf einen eingestellten Solltemperaturwert ein in den Zwischenüberhitzer Z eintretender Massenstrom des Wärmeträgermediums W in Abhängigkeit von einer ermittelten Enthalpiedifferenz des Wärmeträgermediums W zwischen dessen Ein- und Austritt in und aus dem Zwischenüberhitzer Z und einer ermittelten Enthalpiedifferenz des Dampfes D zwischen dessen Aus- und Eintritt aus und in den Zwischenüberhitzer Z entsprechend nachgeregelt wird.

Die Massenstromsollwertführungseinrichtung weist dazu ein erstes und ein zweites Modul 10 und 11 zum Ermitteln der Enthalpie des Wärmeträgermediums W am Ein- und Austritt, sowie ein drittes und ein viertes Modul 20 und 21 zum Ermitteln der Enthalpie des Dampfes D am Ein- und Austritt auf. Diese Ermittlung erfolgt dabei basierend auf Messwerten von entsprechend angeordneten Drucksensoren WP10, WP11, DP20 und DP21, sowie entsprechend angeordneten Temperatursensoren WT10, WT11 und DT20 zur Messung des Drucks und der Temperatur sowohl des Dampfes D als auch des Wärmeträgermediums W. Vorzugsweise sind diese Sensoren unmittelbar am Ein- bzw. Austritt des Dampfes D und des Wärmeträgermediums W in den Zwischenüberhitzer Z angeordnet, um so möglichst genau die aktuell vorliegenden anlagenspezifischen Parameter im Zwischenüberhitzer Z ermitteln zu können.

Da bei einem vom Dampferzeuger physisch getrennten Zwischenüberhitzer Z die zugeführte Menge an Wärmeträgermedium W als freier Parameter angesehen werden kann, muss dem Zwischenüberhitzer Z auch nur gerade soviel Wärmeträgermedium W zugeführt werden, wie zum Erreichen einer gewünschten Solltemperatur des Zwischenüberhitzerdampfes notwendig ist. Diese Solltemperatur am Austritt des Dampfes D aus dem Zwischenüberhitzer Z sollte damit als Regelgröße zum Einstellen des optimalen Massenstroms des Wärmeträgermediums W herangezogen werden. Zum Einstellen dieser optimalen Solltemperatur ist daher ein Stellglied 22 vorgesehen, mit dem dem vierten Modul 21 ein ausgewählter Solltemperaturwert vorgegeben werden kann.

Ferner weist die Massenstromsollwertführungseinrichtung ein erstes Subtrahierglied 24 zum Subtrahieren der ermittelten Dampfeintrittsenthalpie von der ermittelten Dampfaustrittsenthalpie, sowie ein zweites Subtrahierglied 12 zum Subtrahieren der ermittelten Wärmeträgermediumeintrittsenthalpie von der ermittelten Wärmeträgermediumaustrittsenthalpie auf. Mit einem fünften Modul 23 wird eine einen Massenstrom des eintretenden Dampfes D charakterisierende Kenngröße ermittelt. Mittels eines Multipliziergliedes 25 wird diese charakteristische Kenngröße mit der Differenz aus dem ersten Subtrahierglied 24 multipliziert und in einem nachfolgenden Dividierglied 30 wird das Produkt aus dem Multiplizierglied 25 durch die Differenz aus dem zweiten Subtrahierglied 12 dividiert. Das Ergebnis dieses Dividiergliedes 30 wird als ermittelter Massenstromsollwert, dann als Regelgröße der Regeleinrichtung K zum Nachführen des aktuell eingestellten Massenstroms des Wärmeträgermediums W zugeführt.

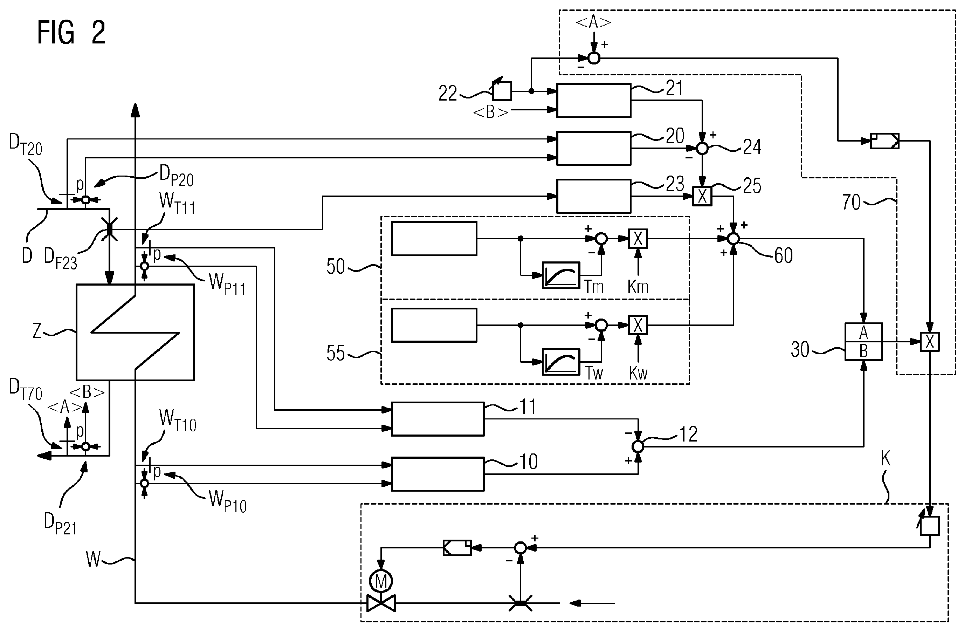

FIG 2 zeigt eine weitere erfindungsgemäße Ausbildung in der für den instationären Fall zusätzlich noch die ein- bzw. ausgespeicherten Wärmemengen in das bzw. aus dem Rohrmaterial des Zwischenüberhitzers Z als auch die ein- bzw. ausgespeicherten Wärmemengen des in dem Zwischenüberhitzer Z befindlichen Wärmeträgermediums berücksichtigt werden. Je nachdem, ob Wärme in das System (bestehend aus Rohrmaterial und Wärmeträgermedium) ein- oder aus dem System ausgespeichert wird, ist verglichen mit dem für den quasistationären Zustand ermittelten Wärmestrom in Konsequenz eine höhere oder geringere Wärmezufuhr durch das Wärmeträgermedium erforderlich. Resultierend ist der wärmeträgermediumseitige Durchfluss durch den Zwischenüberhitzer Z anzupassen. Zur Ermittlung der ein- bzw. ausgespeicherten Wärmemengen der Zwischenüberhitzerrohre kann dabei ein für das Material ermittelter charakteristischer Temperaturkennwert dienen. Dies kann beispielsweise die mittlere Materialtemperatur aller Rohre sein. Über eine Änderung dieser mittleren Materialtemperatur könnte durch geeignete Maßnahmen der in das Rohrmaterial eingespeicherte bzw. der aus dem Rohrmaterial ausgespeicherte Wärmestrom näher quantifiziert und bei der Ermittlung des erforderlichen Wärmeträgermassenstroms adäquat berücksichtigt werden.
Dazu ist wie in FIG 2 dargestellt ein sechstes Modul 50 zur Berücksichtigung einer in Rohrwänden des Zwischenüberhitzers Z ein- bzw. ausgespeicherten thermischen Energie, dessen Ausgabewert von einem Addierglied 60 vor dem Dividierglied 30 dem Produkt aus dem Multiplizierglied 25 aufaddiert wird. Vorzugsweise ist dabei die Änderung der mittleren Materialtemperatur des Rohrmaterials über ein Differenzierglied erster Ordnung auszuwerten. Durch die Wahl einer geeigneten Zeitkonstante Tm und einer geeigneten Verstärkung Km dieses Differenzierglieds ist eine annähernd exakte Vorausberechnung der gespeicherten Wärmemengen möglich.

Zur Ermittlung der ein- bzw. ausgespeicherten Wärmemengen des Wärmeträgermediums ist analog vorzugehen. Dazu kann ein siebtes Modul 55 zur Berücksichtigung einer in das Wärmeträgermedium W ein- bzw. ausgespeicherten thermischen Energie vorgesehen sein, dessen Ausgabewert vom Addierglied 60 vor dem Dividierglied 30 dem Produkt aus dem Multiplizierglied 25 aufaddiert wird. Vorzugsweise ist dabei hier die Änderung der mittleren Temperatur des Wärmeträgermediums über ein Differenzierglied erster Ordnung auszuwerten. Durch die Wahl einer geeigneten Zeitkonstante Tw und einer geeigneten Verstärkung Kw dieses Differenzierglieds ist so eine annähernd exakte Vorausberechnung der gespeicherten Wärmemengen möglich.

Für die Verstärkung beider Differenzierglieder ist vorzugsweise das Produkt aus der Masse und Wärmekapazität im ersten Fall des Rohrmaterials und im zweiten Fall des Wärmeträgermediums zu verwenden. Zusätzlich ist dieses Produkt noch durch die Zeitkonstante des zugehörigen Differenzierglieds zu dividieren. Die Zeitkonstante beider Differenzierglieder kann sich unterscheiden und ist vorzugsweise an die Durchlaufzeiten des Dampfes, des Wärmeträgermediums oder eine geeignete Kombination beider Größen zu koppeln. Wird der zur Erreichung der dampfseitigen Endtemperatur errechnete Wärmebedarf durch diese beiden für den instationären Fall auftretenden Wärmeströme korrigiert, so findet durch das hier beschriebene Regelverfahren eine entsprechende Anpassung des erforderlichen Massenstroms des Wärmeträgermediums W statt, so dass auch im instationären Fall die dampfseitige Zwischenüberhitzeraustrittstemperatur möglichst schwankungsarm regelbar ist.

Bedarfsweise kann diesem Verfahren mit prädiktivem Charakter, wie in FIG 2 dargestellt, eine zusätzliche Regelung 70 überlagert werden, die bei stationär vorliegender Abweichung der mittels eines Temperatursensors DT70 ermittelten Dampftemperatur am Austritt des Zwischenüberhitzers Z zu dem durch das Stellglied 22 vorgegebenen Temperatursollwert diese nachhaltig eliminiert. Zu berücksichtigen ist dabei aber, dass diese überlagerte Regelung 70 nur korrigierend eingreifen darf und somit bezogen auf die Gesamtregelaufgabe ein relativ langsames Regelverhalten aufweisen muss.

## Patentansprüche

1. Verfahren zum Betrieb eines solarthermischen Kraftwerks bei dem in einem Zwischenüberhitzer (Z) im Wasser-Dampf-Kreislauf Dampf (D) von einem solarthermisch aufgeheizten Wärmeträgermedium (W) auf einen einstellbaren Solltemperaturwert am Austritt erhitzt wird,
**dadurch gekennzeichnet, dass**
zum Erhitzen des Dampfes (D) auf einen eingestellten Solltemperaturwert ein in den Zwischenüberhitzer (Z) eintretender Massenstrom des Wärmeträgermediums (W) in Abhängigkeit von einer ermittelten Enthalpiedifferenz des Wärmeträgermediums (W) zwischen dessen Ein- und Austritt in und aus dem Zwischenüberhitzer (Z) und einer ermittelten Enthalpiedifferenz des Dampfes (D) zwischen dessen Aus- und Eintritt aus und in den Zwischenüberhitzer (Z) geregelt wird.

2. Verfahren nach Anspruch 1,
**dadurch gekennzeichnet, dass**
für die Ermittlung der Enthalpie des Dampfes (D) am Eintritt und die Enthalpie des Wärmeträgermediums (W) am Ein- und Austritt jeweils gemessene Ist-Druckwerte und Ist-Temperaturwerte herangezogen werden, und für die Ermittlung der Enthalpie des Dampfes (D) am Austritt ein gemessener Ist-Druckwert des Dampfes (D) am Austritt und der eingestellte Solltemperaturwert des Dampfaustritts herangezogen werden.

3. Verfahren nach Anspruch 1 oder 2,
**dadurch gekennzeichnet, dass**
für die Regelung des in den Zwischenüberhitzer (Z) eintretenden Massenstroms des Wärmeträgermediums (W) aus dem Quotienten von dem Produkt der Enthalpiedifferenz des Dampfes (D) und einer einen Massenstrom des eintretenden Dampfes (D) charakterisierenden Kenngröße mit der Enthalpiedifferenz des Wärmeträgermediums (W) ein Massenstromsollwert bestimmt wird.

4. Verfahren nach einem der Ansprüche 1 bis 3,
**dadurch gekennzeichnet, dass**
für die Regelung des Massenstroms des Wärmeträgermediums (W) zudem eine in Rohrwänden des Zwischenüberhitzers (Z) ein- bzw. ausgespeicherte thermische Energie berücksichtigt wird.

5. Verfahren nach den Ansprüchen 1 bis 4,
**dadurch gekennzeichnet, dass**
für die Regelung des Massenstroms des Wärmeträgermediums (W) zudem eine in das Wärmeträgermedium (W) ein- bzw. ausgespeicherte thermische Energie berücksichtigt wird.

6. Verfahren nach einem der Ansprüche 1 bis 5,
**dadurch gekennzeichnet, dass**
für die Regelung des Massenstroms des Wärmeträgermediums (W) ein am Austritt des Dampfes (D) aus dem Zwischenüberhitzer (Z) gemessener Ist-Temperaturwert berücksichtigt wird.

7. Vorrichtung zum Betrieb eines solarthermischen Kraftwerks bei dem in einem Zwischenüberhitzer (Z) im Wasser-Dampf-Kreislauf Dampf (D) von einem solarthermisch aufgeheizten Wärmeträgermedium (W) auf einen einstellbaren Solltemperaturwert am Austritt erhitzt wird,
**gekennzeichnet durch**
eine Regeleinrichtung (K) für einen in den Zwischenüberhitzer (Z) eintretenden Massenstrom des Wärmeträgermediums (W),
- und eine Massenstromsollwertführungseinrichtung zum Führen der Regeleinrichtung in Abhängigkeit von einer ermittelten Enthalpiedifferenz des Wärmeträgermediums (W) zwischen dessen Ein- und Austritt in und aus dem Zwischenüberhitzer (Z) und einer ermittelten Enthalpiedifferenz des Dampfes (D) zwischen dessen Aus- und Eintritt aus und in den Zwischenüberhitzer (Z), aufweisend ein erstes und ein zweites Modul (10,11) zum Ermitteln der Enthalpie des Wärmeträgermediums (W) am Ein- und Austritt sowie ein drittes und ein viertes Modul (20,21) zum Ermitteln der Enthalpie des Dampfes (D) am Ein- und Austritt.

8. Vorrichtung nach Anspruch 7,
**dadurch gekennzeichnet, dass** die Massenstromsollwertführungseinrichtung ein Stellglied (22) aufweist, mit dem dem vierten Modul (21) ein ausgewählter Solltemperaturwert des Dampfes (D) am Austritt vorgegeben werden kann.

9. Vorrichtung nach Anspruch 7 oder 8,
**dadurch gekennzeichnet, dass**
zum Ermitteln der Enthalpien an den Ein- und/oder Austritten des Dampfes (D) und/oder des Wärmeträgermediums (W) aus und in den Zwischenüberhitzer (Z) Drucksensoren (WP10, WP11, DP20, DP21) und Temperatursensoren (WT10, WT11, DT20, DT70) zur Messung des Drucks und der Temperatur des Dampfes (D) und des Wärmeträgermediums (W) vorgesehen sind.

10. Vorrichtung nach einem der Ansprüche 7 bis 9, wobei die Massenstromsollwertführungseinrichtung ferner aufweist:
- ein erstes Subtrahierglied (24) zum Subtrahieren der ermittelten Dampfeintrittsenthalpie von der ermittelten Dampfaustrittsenthalpie,
- ein zweites Subtrahierglied (12) zum Subtrahieren der ermittelten Wärmeträgermediumaustrittsenthalpie von der ermittelten Wärmeträgermediumseintrittsenthalpie,
- ein fünftes Modul (23) zum Ermitteln einer einen Massenstrom des eintretenden Dampfes (D) charakterisierenden Kenngröße,
- ein Multiplizierglied (25) zum Multiplizieren dieser charakteristischen Kenngröße mit der Differenz aus dem ersten Subtrahiergliedglied (24),
- ein Dividierglied (30) zum Dividieren des Produkts aus dem Multiplizierglied (25) mit der Differenz aus dem zweiten Subtrahierglied (12).

11. Vorrichtung nach Anspruch 10,
**dadurch gekennzeichnet, dass**
zudem ein sechstes Modul (50) zur Berücksichtigung einer in Rohrwänden des Zwischenüberhitzers (Z) ein- bzw. ausgespeicherten thermischen Energie vorgesehen ist und dessen Ausgabewert von einem Addierglied (60) vor dem Dividierglied (30) dem Produkt aus dem Multiplizierglied (25) aufaddiert wird.

12. Vorrichtung nach Anspruch 10 oder 11,
**dadurch gekennzeichnet, dass**
zudem ein siebtes Modul (55) zur Berücksichtigung einer in das Wärmeträgermedium (W) ein- bzw. ausgespeicherten thermischen Energie vorgesehen ist und dessen Ausgabewert von einem Addierglied (60) vor dem Dividierglied (30) dem Produkt aus dem Multiplizierglied (25) aufaddiert wird.

13. Vorrichtung nach einem der Ansprüche 10 bis 12,
**dadurch gekennzeichnet, dass**
ein die Massenstromsollwertführungseinrichtung überlagerndes Führungsmodul (70) vorgesehen ist, das bei stationär vorliegenden Abweichungen zwischen gemessener Dampfaustrittstemperatur und eingestelltem Solltemperaturwert den am Ausgang des Dividierglieds (30) vorliegenden Quotienten mittels einem weiteren Multiplizierglied korrigiert.

14. Parabolrinnenkraftwerk mit einem solarthermisch aufgeheizten Wärmeträgermedium (W), einem Zwischenüberhitzer (Z) im Wasser-Dampf-Kreislauf in dem Dampf (D) vom Wärmeträgermedium (W) auf einen einstellbaren Solltemperaturwert am Austritt erhitzt wird, und einer nach einem der Ansprüche 7 bis 13 ausgebildeten Vorrichtung zum Regeln eines in den Zwischenüberhitzer (Z) eintretenden Massenstroms des Wärmeträgermediums (W).

15. Parabolrinnenkraftwerk nach Anspruch 14,
**dadurch gekennzeichnet, dass**
das Wärmeträgermedium (W) Thermoöl ist.

## Claims

1. Method for operating a solar thermal power plant in which steam (D) is heated in an intermediate superheater (Z) in the water/steam circuit by a solar-thermally heated heat transfer medium (W) to an adjustable setpoint temperature value at the exit,
**characterized in that**
in order to heat the steam (D) to an adjusted setpoint temperature value, a mass flow of the heat transfer medium (W) entering the intermediate superheater (Z) is regulated as a function of an ascertained enthalpy difference of the heat transfer medium (W) between its entry and exit into and out of the intermediate superheater (Z) and an ascertained enthalpy difference of the steam (D) between its exit and entry out of and into the intermediate superheater (Z).

2. Method according to Claim 1,
**characterized in that**
actual pressure values and actual temperature values respectively measured at the entry and exit are used in order to ascertain the enthalpy of the steam (D) at the entry and the enthalpy of the heat transfer medium (W) at the entry and exit, and a measured actual pressure value of the steam (D) at the exit and the adjusted setpoint temperature value of the steam exit are used in order to ascertain the enthalpy of the steam (D) at the exit.

3. Method according to Claim 1 or 2,
**characterized in that**
in order to regulate the mass flow of the heat transfer medium (W) entering the intermediate superheater (Z), a mass flow setpoint value is determined from the ratio of the product of the enthalpy difference of the steam (D) and a parameter characterizing a mass flow of the incoming steam (D) to the enthalpy difference of the heat transfer medium (W).

4. Method according to one of Claims 1 to 3,
**characterized in that** thermal energy stored in or released from tube walls of the intermediate superheater (Z) is also taken into account in order to regulate the mass flow of the heat transfer medium (W).

5. Method according to one of Claims 1 to 4,
**characterized in that**
thermal energy stored in or released from the heat transfer medium (W) is also taken into account in order to regulate the mass flow of the heat transfer medium (W).

6. Method according to one of Claims 1 to 5
**characterized in that**
an actual temperature value measured at the exit of the steam (D) from the intermediate superheater (Z) is also taken into account in order to regulate the mass flow of the heat transfer medium (W).

7. Apparatus for operating a solar thermal power plant in which steam (D) is heated in an intermediate superheater (Z) in the water/steam circuit by a solar-thermally heated heat transfer medium (W) to an adjustable setpoint temperature value at the exit,
**characterized by** a regulating device (K) for a mass flow of the heat transfer medium (W) entering the intermediate superheater (Z)
- and a mass flow setpoint value control device for controlling the regulating device as a function of an ascertained enthalpy difference of the heat transfer medium (W) between its entry and exit into and out of the intermediate superheater (Z) and an ascertained enthalpy difference of the steam (D) between its exit and entry out of and into the intermediate superheater (Z), having a first and a second module (10, 11) for ascertaining the enthalpy of the heat transfer medium (W) at the entry and exit, as well as a third and a fourth module (20, 21) for ascertaining the enthalpy of the steam (D) at the entry and exit.

8. Apparatus according to Claim 7,
**characterized in that** the mass flow setpoint value control device has a controlling element (22) by which a selected setpoint temperature value of the steam (D) at the exit is specified for the fourth module (21).

9. Apparatus according to Claim 7 or 8,
**characterized in that**
pressure sensors (WP10, WP11, DP20, DP21) and temperature sensors (WT10, WT11, DT20, DT70) for measuring the pressure and temperature of the steam (D) and of the heat transfer medium (W) are provided in order to ascertain the enthalpies at the entries and/or exits of the steam (D) and/or of the heat transfer medium (W) out of and into the intermediate superheater (Z).

10. Apparatus according to one of Claims 7 to 9, wherein the mass flow setpoint value control device furthermore has:
- a first subtractor element (24) for subtracting the ascertained steam entry enthalpy from the ascertained steam exit enthalpy,
- a second subtractor element (12) for subtracting the ascertained heat transfer medium exit enthalpy from the ascertained heat transfer medium entry enthalpy,
- a fifth module (23) for ascertaining a parameter characterizing a mass flow of the incoming steam (D),
- a multiplier element (25) for multiplying this characteristic parameter by the difference from the first subtractor element (24),
- a divider element (30) for dividing the product from the multiplier element (25) by the difference from the second subtractor element (12).

11. Apparatus according to Claim 10,
**characterized in that** a sixth module (50) is furthermore provided in order to take into account thermal energy stored in or released from tube walls of the intermediate superheater (Z), the output value of which is added to the product from the multiplier element (25) by an adder element (60) before the divider element (30).

12. Apparatus according to Claim 10 or 11,
**characterized in that**
a seventh module (55) is furthermore provided in order to take into account thermal energy stored in or released from the heat transfer medium (W), the output value of which is added to the product from the multiplier element (25) by an adder element (60) before the divider element (30).

13. Apparatus according to one of Claims 10 to 12,
**characterized in that**
a control module (70) superordinate to a mass flow setpoint value guide device is provided, which corrects the ratio at the output of the divider element (30) by means of a further multiplier element in the event of steady state deviations between the measured steam exit temperature and the adjusted setpoint temperature value.

14. Parabolic trough power plant having a solar-thermally heated heat transfer medium (W), an intermediate superheater (Z) in the water/steam circuit, in which steam (D) is heated by the heat transfer medium (W) to an adjustable setpoint temperature value at the exit, and an apparatus formed according to one of Claims 7 to 13 for regulating a mass flow of the heat transfer medium (W) entering the intermediate superheater (Z).

15. Parabolic trough power plant according to Claim 14,
**characterized in that**
the heat transfer medium (W) is thermal oil.

## Revendications

1. Procédé pour faire fonctionner une centrale héliothermique, dans lequel, dans un surchauffeur ( Z ) intermédiaire d'un circuit eau-vapeur, on chauffe de la vapeur ( D ) d'un fluide ( W ) caloporteur chauffé hiélothermiquement à une valeur de température de consigne à la sortie qui est réglable,
**caractérisé en ce que**
pour chauffer la vapeur ( D ) à une valeur de température de consigne réglée, on régule un courant massique du fluide ( W ) caloporteur entrant dans le surchauffeur ( Z ) intermédiaire en fonction d'une différence d'enthalpie déterminée du fluide ( W ) caloporteur entre son entrée dans le surchauffeur ( Z ) intermédiaire et sa sortie du surchauffeur ( Z ) intermédiaire et une différence d'enthalpie déterminée de la vapeur ( D ) entre sa sortie du surchauffeur ( Z ) intermédiaire et son entrée dans le surchauffeur ( Z ) intermédiaire.

2. Procédé suivant la revendication 1,
**caractérisé en ce que**
pour déterminer l'enthalpie de la vapeur ( D ) à l'entrée et l'enthalpie du fluide ( W ) caloporteur à l'entrée et à la sortie, on tire parti des valeurs de pression réelles et des valeurs de température réelles mesurées et, pour déterminer l'enthalpie de la vapeur ( D ) à la sortie, on tire parti d'une valeur de pression réelle mesurée de la vapeur ( D ) à la sortie et de la valeur de température de consigne réglée de la sortie de la vapeur.

3. Procédé suivant la revendication 1 ou 2,
**caractérisé en ce que**
pour régler le courant massique du fluide ( W ) caloporteur entrant dans le surchauffeur ( Z ) intermédiaire, on détermine une valeur de consigne de courant massique à partir du quotient du produit de la différence d'enthalpie de la vapeur ( D ) et d'une grandeur caractérisant un courant massique de la vapeur ( D ) entrante par la différence d'enthalpie du fluide ( W ) caloporteur.

4. Procédé suivant l'une des revendications 1 à 3,
**caractérisé en ce que**
pour régler le courant massique du fluide ( W ) caloporteur, on tient compte, en outre, d'une énergie thermique accumulée dans les parois des tubes du surchauffeur ( Z ) intermédiaire.

5. Procédé suivant l'une des revendications 1 à 4,
**caractérisé en ce que**
pour régler le courant massique du fluide ( W ) caloporteur, on tient compte, en outre, d'une énergie thermique accumulée dans le fluide ( W ) caloporteur.

6. Procédé suivant l'une des revendications 1 à 5,
**caractérisé en ce que**
pour régler le courant massique du fluide ( W ) caloporteur, on tient compte d'une valeur de température réelle mesurée à la sortie de la vapeur ( D ) du surchauffeur ( Z ) intermédiaire.

7. Dispositif pour faire fonctionner une centrale héliothermique, dans lequel, dans un surchauffeur ( Z ) intermédiaire du circuit eau-vapeur, de la vapeur ( D ) d'un fluide ( W ) caloporteur chauffé héliothermiquement est chauffée à une valeur de température de consigne à la sortie qui peut être réglée,
**caractérisé par**
- un dispositif ( K ) de régulation d'un courant massique du fluide ( W ) caloporteur entrant dans le surchauffeur ( Z ) intermédiaire,
- et un dispositif de conduite à valeur de consigne de courant massique pour conduire le dispositif de régulation en fonction d'une différence d'enthalpie déterminée du fluide ( W ) caloporteur entre son entrée et sa sortie dans le surchauffeur ( Z ) intermédiaire et de la différence d'enthalpie déterminée de la vapeur ( D ) entre sa sortie et son entrée dans le surchauffeur ( Z ) intermédiaire, comprenant un premier et un deuxième modules ( 10, 11 ) de détermination de l'enthalpie du fluide ( W ) caloporteur à l'entrée et à la sortie, ainsi qu'un troisième et un quatrième modules ( 20, 21 ) de détermination de l'enthalpie de la vapeur ( D ) à l'entrée et à la sortie.

8. Dispositif suivant la revendication 7,
**caractérisé en ce que**
le dispositif de conduite de la valeur de consigne de courant massique comporte un élément ( 22 ) de réglage, par lequel une valeur de température de consigne sélectionnée de la vapeur ( D ) à la sortie peut être prescrite au quatrième module ( 21 ).

9. Dispositif suivant la revendication 7 ou 8,
**caractérisé en ce que**
pour déterminer les enthalpies à l'entrée et/ou à la sortie de la vapeur ( D ) et/ou du fluide ( W ) caloporteur à la sortie et à l'entrée dans le surchauffeur ( Z ) intermédiaire, il est prévu des sondes ( WP10, WP11, DP20, DP21 ) de pression et des sondes ( WT10, WT11, DT20, DT70 ) de température pour mesurer la pression et la température de la vapeur ( D ) et du fluide ( W ) caloporteur.

10. Dispositif suivant l'une des revendications 7 à 9, dans lequel le dispositif de conduite de la valeur de consigne du courant massique a, en outre :
- un premier élément ( 24 ) soustracteur pour soustraire l'enthalpie d'entrée de la vapeur déterminée de l'enthalpie de sortie de la valeur déterminée,
- un deuxième élément ( 12 ) soustracteur pour soustraire l'enthalpie de sortie du fluide caloporteur déterminée de l'enthalpie d'entrée du fluide caloporteur déterminée,
- un cinquième module ( 23 ) pour déterminer une grandeur caractéristique caractérisant un courant massique de la vapeur ( D ) entrante,
- un élément ( 25 ) multiplicateur pour multiplier cette grandeur caractéristique caractérisant par la différence du premier élément ( 24 ) de soustraction,
- un élément ( 30 ) de division pour diviser le produit de l'élément ( 25 ) de multiplication par la différence du deuxième élément ( 12 ) de soustraction.

11. Dispositif suivant la revendication 10,
**caractérisé en ce que**
il est prévu, en outre, un sixième module ( 50 ) pour tenir compte d'une énergie thermique accumulée dans des parois des tubes du surchauffeur ( Z ) intermédiaire et dont la valeur de sortie est ajoutée par un élément ( 60 ) additionneur avant l'élément ( 30 ) diviseur au produit de l'élément ( 25 ) multiplicateur.

12. Dispositif suivant la revendication 10 ou 11,
**caractérisé en ce que**
il est prévu, en outre, un septième module ( 55 ) pour tenir compte d'une énergie thermique accumulée dans le fluide ( W ) caloporteur et dont la valeur de sortie est ajoutée par un élément ( 60 ) additionneur avant l'élément ( 30 ) diviseur au produit de l'élément ( 25 ) multiplicateur.

13. Dispositif suivant l'une des revendications 10 à 12,
**caractérisé en ce que**
il est prévu un module ( 70 ) de conduite se superposant au dispositif de conduite de valeur de consigne de courant massique, qui, pour des écarts fixes entre la température de sortie de la vapeur qui est mesurée et la valeur de température de consigne réglée, corrige le quotient à la sortie de l'élément ( 30 ) diviseur au moyen d'un autre élément multiplicateur.

14. Centrale cylindroparabolique ayant un fluide ( W ) caloporteur chauffé héliothermiquement, un surchauffeur ( Z ) intermédiaire dans le circuit eau-vapeur, dans lequel de la vapeur ( D ) du fluide ( W ) caloporteur est chauffée à une valeur de consigne de température à la sortie qui est réglable et un dispositif constitué suivant l'une des revendications 7 à 13 pour réguler un courant massique du fluide ( W ) caloporteur entrant dans le surchauffeur ( Z ) intermédiaire.

15. Centrale cylindroparabolique suivant la revendication 14,
**caractérisée en ce que**
le fluide ( W ) caloporteur est de l'huile thermique.
